# EUROPÄISCHE PATENTSCHRIFT

(11) **EP 0 526 757 B1**
(45) Veröffentlichungstag und Bekanntmachung des Hinweises auf die Patenterteilung: **25.01.1995**
(21) Anmeldenummer: 92111664.6
(22) Anmeldetag: 09.07.1992
(51) Int. Cl.: B62D 27/04

(54) **Keder für ein Kraftfahrzeug**
Beading for a motor vehicle
Bourrelet pour un véhicule à moteur

(30) Priorität: 05.08.1991 DE 4125943
(43) Veröffentlichungstag der Anmeldung: 10.02.1993
(73) Patentinhaber: Dr.Ing.h.c. F. Porsche Aktiengesellschaft, 70435 Stuttgart (DE)
(72) Erfinder: Lehmann, Klaus-Peter, W-7130 Mühlacker (DE); Rijsbergen, Markus, W-7533 Tiefenbronn-Lehningen (DE); Just, Jan, W-7250 Leonberg (DE)

(56) Entgegenhaltungen:
- DE-B- 1 277 042
- US-A- 1 760 838

## Beschreibung

Die Erfindung bezieht sich auf einen Keder, der in einen länglichen Spalt zwischen angrenzenden Karosserieteilen eines Kraftfahrzeuges eingesetzt ist und einen Fußabschnitt zur Befestigung sowie einen den Spalt zumindest teilweise ausfüllenden, mit dem Fußabschnitt verbundenen Hohlprofilabschnitt umfaßt.

Derartige Keder sind bei einer Vielzahl von Kraftfahrzeugen zwischen einer elastischen Bugverkleidung, einer Heckverkleidung oder einer Schwellerblende und einem angrenzenden Karosserieteil vorgesehen, um die auftretenden Toleranzen und/oder Wärmeausdehnungen zu kompensieren.

An den Endbereichen der Spalte, z.B. im Bereich der Radhäuser, werden die Hohlprofilabschnitte durch anvulkanisierte oder angespritzte Endstücke geschlossen, wobei nach innen hin abgestellte Stege der Endstücke über zusätzliche Befestigungselemente an der Karosserie in Lage gehalten sind.

Bei angespritzten oder anvulkanisierten Endstücken müssen die Keder in der Länge maßgenau hergestellt sein und das Anspritzen oder Anvulkanisieren stellt einen relativ zeitaufwendigen und kostenintensiven Arbeitsgang dar. Ferner ist die Trennstelle zwischen Keder und Endstück sichtbar. Ein Keder gemäß dem Oberbegriff des Anspruchs 1 ist z.B. in US-A-1 760 838 beschrieben.

Aufgabe der Erfindung ist es, einen in den Spalt zwischen angrenzenden Karosserieteilen eingesetzten Keder an seinen Endbereichen so auszubilden, daß bei sicherem Halt und optisch einwandfreiem Aussehen die Herstellungs- und Montagekosten reduziert werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch das Einsetzten eines Einlageteils in den Hohlprofilabschnitt und das nachträgliche Umbiegen zur Innenseite hin ein kostengünstiger Abschluß für einen Keder erzielt wird, da auf ein angespritzes bzw. anvulkanisiertes Endstück verzichtet werden kann. Das durch einen biegeweichen Draht gebildete Einlageteil ist kostengünstig herstell- und in einfacher Weise in den Hohlprofilabschnitt einsetzbar. Das eingesteckte Einlageteil wird durch einen Festsitz selbsttätig innerhalb des Keders in Lage gehalten. Das Einlageteil bewirkt, daß der umgebogene Endschnitt des Keders ohne zusätzliche Befestigungselemente selbsttätig funktionsgerecht in Lage gehalten ist. Ferner wird mit dieser Ausbildung ein optisch einwandfreies Aussehen des Endbereiches des Keders erzielt. Durch das Umbiegen der Endbereiche des Keders ist ein genauer Längenzuschnitt des Keders nicht erforderlich.

Ein Ausführungsbeispiel der Erfindung ist in der Zeichnung dargestellt und wird im folgenden näher erläutert:

Es zeigt
- Fig. 1: eine perspektivische Teilansicht von hinten auf einen Personenkraftwagen,
- Fig. 2: einen Schnitt nach der Linie II-II der Fig. 1 in größerem Maßstab,
- Fig. 3: einen Ausschnitt X der Fig. 1 in größerem Maßstab,
- Fig. 4: einen Schnitt nach der Linie IV-IV der Fig. 3 in größerem Maßstab,
- Fig. 5: eine Draufsicht auf den vorderen Endbereich des Keders im Anlieferungs- und Montagezustand, teilweise im Schnitt,
- Fig. 6: eine Teildraufsicht auf einen Endbereich eines Keders für ein Bugendteil,
- Fig. 7: einen Schnitt nach der Linie VII-VII der Fig. 6 in größerem Maßstab.

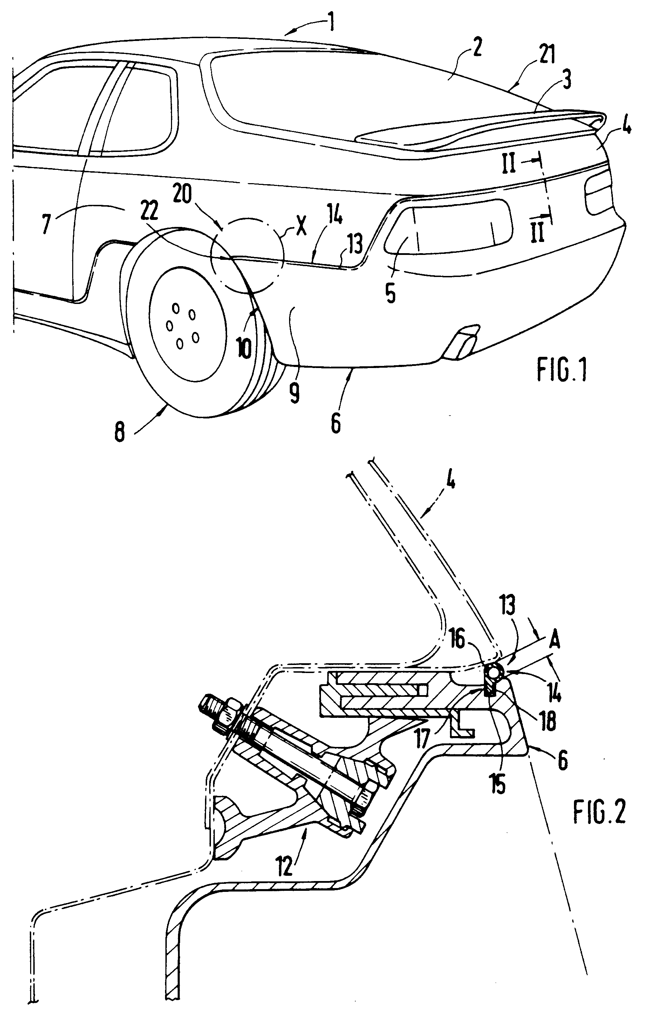

In Fig. 1 ist ein Teilbereich eines Personenkraftwagens 1 dargestellt, der im gezeigten Bereich eine Heckscheibe 2 mit einer Luftleitvorrichtung 3, einer Heckquerwand 4, eine mit Leuchteneinheiten 5 versehene Heckverkleidung 6, Seitenteile 7 und Räder 8 aufweist.

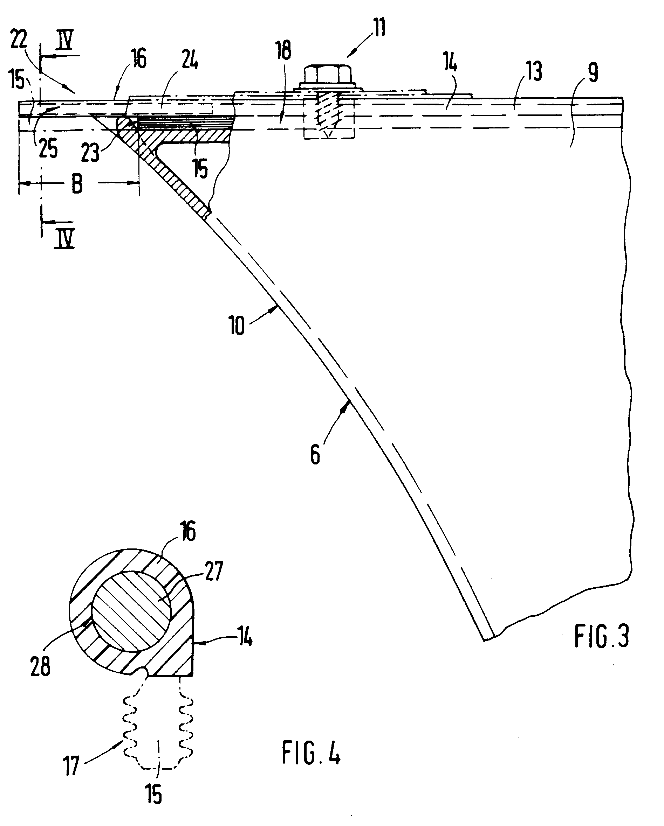

Die aus elastischem Werkstoff gefertigte großflächige Heckverkleidung 6 ist im hinteren, quer verlaufenden Bereich an eine Heckquerwand 4 und im seitlichen Bereich an Seitenteile 7 angeschlossen, wobei seitliche Abschnitte 9 der Heckverkleidung 6 bis an ein hinteres Radhaus 10 herangeführt sind und dieses abschnittsweise begrenzen. Die Heckverkleidung 6 ist mittels Schrauben 11 (siehe Fig.3) und/oder Klemmverbindungen 12 (siehe Fig.2) in bekannter Weise an angrenzenden Karosserieteilen (Heckquerwand 4, Seitenteile 7) in Lage gehalten.

Zwischen einem oberen Rand der Heckverkleidung 6 (erstes Karosserieteil) und einem angrenzenden abgesetzten Bereich der Heckquerwand 4 bzw. des Seitenteils 7 (zweites Karosserieteil) verläuft ein durchgehender Spalt 13, der durch einen elastischen Keder 14 zumindest teilweise abgedeckt ist.

Der Keder 14 ist aus Gummi, elastischem Kunststoff oder dergleichen hergestellt und setzt sich aus einem Fußabschnitt 15 und einem einstückig damit verbundenen Hohlprofilabschnitt 16 zusammen.

Gemäß den Fig. 2 bis 4 wird der längliche Fußabschnitt 15, der an beiden Seiten mit einer sägezahnförmigen bzw. rillenförmigen Profilierung 17 versehen ist, in eine U-förmige Aufnahme 18 der Heckverkleidung 6 unter Vorspannung eingesetzt.

An den Fußabschnitt 15 schließt sich oberhalb der Aufnahme 18 der etwa kreisförmig profilierte Schlauch- oder Hohlprofilabschnitt 16 an, wobei der Hohlprofilabschnitt 16 eine geringfügig größere Breite aufweist als die Spaltbreite A zwischen den angrenzenden Karosserieteilen 4 bzw. 6 (Fig.2). Entsprechend Fig. 2 ist der Fußabschnitt 15 in eine nach oben hin offene U-förmige Aufnahme 18 der Heckverkleidung 6 eingesetzt, wobei die Aufnahme 18 mit geringem Abstand zur Fahrzeugaußenseite verläuft.

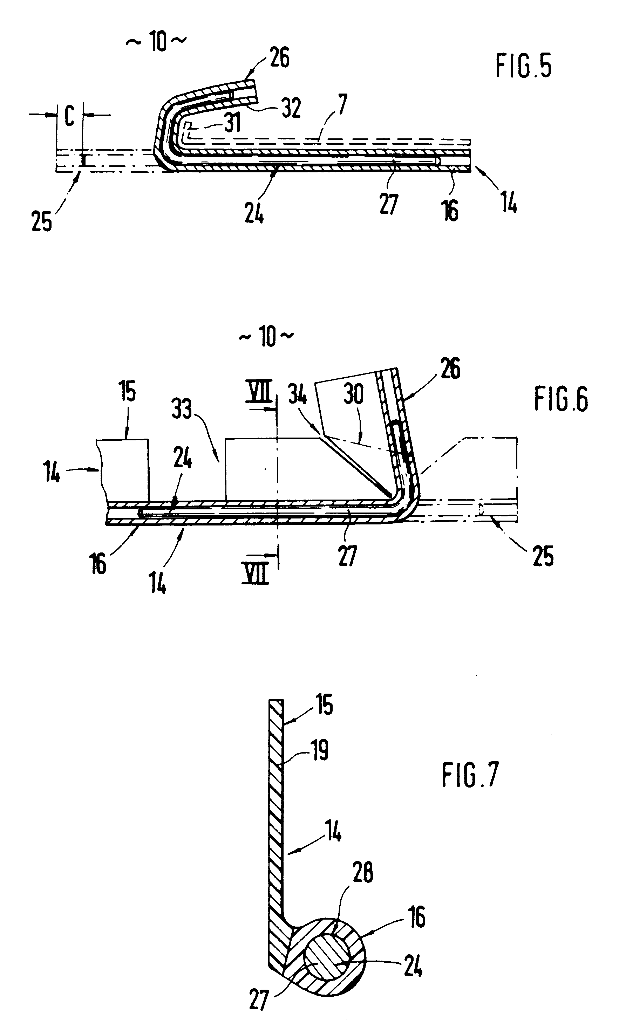

Es besteht aber auch die Möglichkeit, daß der Fußabschnitt 15 durch einen länglichen Steg 19 gebildet wird, der an einer oberen, etwa horizontal verlaufenden Begrenzungsfläche der Heckverkleidung 6 aufliegt und durch Kleben, Tackern oder dergleichen an dieser befestigt ist (Fig. 7).

Bei den in den Fig. 4 und 7 dargestellten Kedern 14 weist der Fußabschnitt 15 bzw. der Steg 19 eine größere Härte auf als der Hohlprofilabschnitt 16. Es besteht jedoch die Möglichkeit, daß der Fußabschnitt 15 und der Hohlprofilabschnitt 16 die gleiche Shore-Härte aufweisen. Der Keder 14 erstreckt sich durchgehend vom hinteren Radhaus 10 der einen Fahrzeuglängsseite 20 entlang dem oberen Rand der Heckverkleidung 6 bis zum hinteren Radhaus 10 der gegenüberliegenden Fahrzeuglängsseite 21, wobei Endbereiche 22 die Aufnahme 18 um ein Maß B überragen.

An den Endbereichen 22 des Keders 14 ist der Fußabschnitt 15 am Ende der U-förmigen Aufnahme 18 bei 23 derart beschnitten, daß lediglich der oberhalb der Aufnahme 18 verlaufende Hohlprofilabschnitt 16 weitergeführt ist, wobei der Hohlprofilabschnitt 16 die Heckverkleidung 6 in Längsrichtung überragt (Fig.3).

Erfindungsgemäß ist vorgesehen, daß in einen Endbereich 22 des Hohlprofilabschnitts 16 ein Einlageteil 24 eingesetzt ist und daß ein den Spalt 13 bzw. die Aufnahme 18 endseitig überragender Abschnitt 25 des Keders 14 bzw. des Hohlprofilabschnitts 16 am Spaltende dergestalt von Hand umgebogen ist, daß sich ein umgebogener Bereich 26 des Keders 14 von der Fahrzeugaußenhaut weg nach innen hin erstreckt. Der umgebogene Bereich 26 kann entweder einen geradlinigen Verlauf (Fig. 6) oder aber einen etwa U-förmigen Verlauf aufweisen (Fig. 5).

Das Einlageteil 24 wird durch einen dünnen, biegeweichen Draht 27 gebildet, der beispielsweise aus Leichtmetall (Alu) hergestellt ist.

Der im Ausführungsbeispiel einen Durchmesser von etwa 2±0,5 mm aufweisende Draht 27 wird in den Hohlprofilabschnitt 16 eingesetzt, wobei ein Festsitz für den eingelegten Draht 27 vorgesehen ist.

Das Einlageteil 24 hat einen geringfügig größeren Durchmesser als die korrespondierende Ausnehmung 28 des elastischen Hohlprofilabschnittes 16, wobei sich die Ausnehmung 28 bei der Montage etwas aufweitet und der Hohlprofilabschnitt 16 unter Vorspannung am Einlageteil 24 anliegt.

Gemäß den Fig. 4 und 7 sind die Ausnehmung 28 und das Einlageteil 24 im Querschnitt etwa kreisförmig ausgebildet. Es besteht aber auch die Möglichkeit, den Querschnitt quadratisch, rechteckig, oval oder dergleichen auszubilden.

Entsprechend Fig. 5 erstreckt sich das Einlageteil 24 sowohl in einem Endbereich des Spaltes 13 als auch im umgebogenen Bereich 26. Der umgebogene Bereich 26 des Keders 14 kann nach der Montage entlang der Linie 30 beschnitten sein.

Das Einlageteil 24 weist eine gestreckte Länge von etwa 70±50 mm auf. Für den umgebogenen Bereich 26 ist eine Länge von etwa 10 bis 60 mm vorgesehen. Gemäß Fig. 6 erstreckt sich der umgebogene Bereich 26 quer zur Fahrzeuglängsrichtung und zwar in den Innenraum eines Radhauses 10 hinein.

Der umgebogene Bereich 26 ist entsprechend Fig. 5 um einen abgestellten Flansch 31 des Radhauses 10 herumgeführt, wobei sich der innenliegende Schenkel 32 in Längsrichtung nach hinten hin erstreckt.

Gemäß Fig. 5 überragt ein freies Ende des Hohlprofilabschnittes 16 den eingesetzten Draht 27 um einen geringen Betrag (Maß C). Das Einlageteil 24 kann aber auch bündig mit dem Hohlprofilabschnitt 16 verlaufen Fig. 3 oder geringfügig vorstehen.

Die erfindungsgemäße Ausbildung des Keders 14 kann neben Heckverkleidungen auch bei Bugverkleidungen, siehe Fig. 6 und 7, seitlichen Schwellerblenden oder dergleichen verwendet werden.

Bei der Anordnung gemäß Fig. 6 ist der Fußabschnitt 15 örtlich ausgespart (bei 33 und 34) und ferner ist der Fußabschnitt 15 mit umgebogen.

## Patentansprüche

1. Keder, der in einen länglichen Spalt zwischen angrenzenden Karosserieteilen eines Kraftfahrzeuges eingesetzt ist und einen Fußabschnitt zur Befestigung sowie einen den Spalt (13) zumindest teilweise ausfüllenden, mit dem Fußabschnitt verbundenen Hohlprofilabschnitt (16) umfaßt, **dadurch gekennzeichnet,** daß in einen Endbereich (22) des Hohlprofilabschnittes (16) ein Einlageteil (24) eingesetzt ist und daß ein den Spalt (13) endseitig überragender Abschnitt (25) des Hohlprofilabschnittes (16) bzw. des Keders (14) am Spaltende (23) dergestalt umgebogen ist, daß sich der umgebogene Bereich (26) des Hohlprofilabschnittes (16) bzw. des Keders (14) von der Fahrzeugaußenhaut weg nach innen hin erstreckt.

2. Keder nach Anspruch 1, **dadurch gekennzeichnet,** daß die das Einlageteil (24) aufnehmende Ausnehmung (28) des Hohlprofilabschnittes (16) einen kreisförmigen Querschnitt aufweist.

3. Keder nach den Ansprüchen 1 und 2, **dadurch gekennzeichnet,** daß das Einlageteil (24 ) durch einen biegeweichen Draht (27)gebildet wird.

4. Keder nach Anspruch 3, **dadurch gekennzeichnet,** daß der Draht (27) aus Leichtmetall gefertigt ist.

5. Keder nach einem oder mehreren der vorangehenden Ansprüche, **dadurch gekennzeichnet,** daß sich das Einlageteil (24) sowohl in einen langgestreckten Endbereich des Spaltes (13) als auch im umgebogenen Bereich (26) erstreckt.

6. Keder nach einem oder mehreren der vorangehenden Ansprüche, **dadurch gekennzeichnet,** daß der umgebogene Bereich (26) des Hohlprofilabschnittes (16) bzw. des Keders (14) nach der Montage beschnitten wird.

7. Keder nach Anspruch 1, **dadurch gekennzeichnet,** daß das Einlageteil (24) eine gestreckte Länge von etwa 70±50 mm aufweist.

8. Keder nach Anspruch 1, **dadurch gekennzeichnet,** daß der umgebogene Bereich (26) des Keders (14) etwa 10-60 mm lang ist.

9. Keder nach Anspruch 1, **dadurch gekennzeichnet,** daß sich der umgebogene Bereich (26) in ein Radhaus (10) des Aufbaus hinein erstreckt.

10. Keder nach den Ansprüchen 1 und 2, **dadurch gekennzeichnet,** daß das Einlegeteil (24) einen geringfügig größeren Durchmesser aufweist als die Ausnehmung (28) des elastischen Hohlprofilabschnitts (16).

11. Verfahren zur Montage eines zwischen zwei angrenzenden Karosserieteilen angeordneten Keders eines Kraftfahrzeuges nach einem oder mehreren der vorangehenden Ansprüche, **dadurch gekennzeichnet,** daß nach Einsetzen eines Einlageteils (24) in einen Endbereich (22) des Hohlprofilabschnitts (16) dieser bzw. der Keder (14) nach innen hin umgebogen wird, so daß sich ein umgebogener Bereich (26) zum Fahrzeuginnern hin erstreckt.

## Claims

1. Beading, inserted into a longitudinal gap between adjacent parts of the bodywork of a motor vehicle and comprising a base portion for fastening and a hollow profiled portion (16) at least partially filling the gap (13) and joined to the base portion, **characterized in that** an insert (24) is inserted into an end region (22) of the hollow profiled portion (16), and the end of a portion (25) of the hollow profiled portion (16) or the beading (14) projecting beyond the gap (13) is bent over at the end (23) of the gap in such a way that the bent-over region (26) of the hollow profiled portion (16) or beading (14) extends inwards away from the outer skin of the vehicle.

2. Beading according to Claim 1, **characterized in that** the recess (28) of the hollow profiled portion (16) receiving the insert (24) has a circular cross-section.

3. Beading according to Claim 1 and 2, **characterized in that** the insert (24) is formed by a flexurally yielding wire (27).

4. Beading according to Claim 3, **characterized in that** the wire (27) is produced from light metal.

5. Beading according to one or more of the preceding Claims, **characterized in that** the insert (24) extends both into an elongate end region of the gap (13) and in the bent-over region (26).

6. Beading according to one or more of the preceding Claims, **characterized in that** the bent-over region (26) of the hollow profiled portion (16) or beading (14) is trimmed after assembly.

7. Beading according to Claim 1, **characterized in that** the insert (24) has a stretched length of about 70 ± 50 mm.

8. Beading according to Claim 1, **characterized in that** the bent-over region (26) of the beading (14) is from about 10 to 60 mm long.

9. Beading according to Claim 1, **characterized in that** the bent-over region (26) extends into a wheel housing (10) in the body.

10. Beading according to Claims 1 and 2, **characterized in that** the insert (24) has a slightly larger diameter than the recess (28) in the resilient hollow profiled portion (16).

11. A method of assembling a beading arranged between two adjacent bodywork parts of a motor vehicle, according to one or more of the preceding Claims, **characterized in that** after the insertion of an insert (24) into an end region (22) of the hollow profiled portion (16) the said hollow profiled portion (16) or the beading (14) is bent over inwards so that a bent-over region (26) extends towards the interior of the vehicle.

## Revendications

1. Bourrelet, qui est inséré dans une fente allongée entre des parties adjacentes de la carrosserie d'un véhicule automobile et qui comprend une portion de pied destinée à la fixation ainsi qu'une portion de profilé creux (16) remplissant au moins en partie la fente (13), reliée avec la portion de pied, caractérisé en ce que dans une zone d'extrémité (22) de la portion de profilé creux (16) est inséré un élément de garniture (24) et en ce qu'une partie (25), dépassant à une extrémité de la fente (13), de la portion de profilé creux (16) ou du bourrelet (14), est repliée à l'extrémité (23) de la fente, de manière que la zone (26) repliée de la portion de profilé creux (16) ou du bourrelet (14), s'étende vers l'intérieur, à l'opposé de la carrosserie extérieure du véhicule.

2. Bourrelet selon la revendication 1, caractérisé en ce que l'évidement (28), logeant l'élément de garniture (24), de la portion de profilé creux (16), présente une section transversale circulaire.

3. Bourrelet selon les revendications 1 et 2, caractérisé en ce que l'élément de garniture (24) est formé par un fil (27) flexible.

4. Bourrelet selon la revendication 3, caractérisé en ce que le fil (27) est réalisé dans un métal léger.

5. Bourrelet selon une ou plusieurs des revendications précédentes, caractérisé an ce que l'élément de garniture (24) s'étend dans une zone d'extrémité allongée de la fente (13) ainsi que dans la zone repliée (26).

6. Bourrelet selon une ou plusieurs des revendications précédentes, caractérisé en ce que la zone (26) repliée de la portion de profilé creux (16) ou du bourrelet (14) est coupée après montage.

7. Bourrelet selon la revendication 1, caractérisé en ce que l'élément de garniture (24) présente une longueur étirée d'environ 70 ± 50 mm.

8. Bourrelet selon la revendication 1, caractérisé en ce que la zone repliée (26) du bourrelet (14) a une longueur comprise entre 10 et 70 mm environ.

9. Bourrelet selon la revendication 1, caractérisé en ce que la zone repliée (26) s'étend à l'intérieur d'un logement de roue (10) de la carrosserie.

10. Bourrelet selon les revendications 1 et 2, caractérisé en ce que l'élément de garniture (24) présente un diamètre légèrement supérieur à l'évidement (28) de la portion de profilé creux (16) élastique.

11. Procédé de montage d'un bourrelet, placé entre deux parties adjacentes de la carrosserie d'un véhicule automobile, selon une ou plusieurs des revendications précédentes, caractérisé an ce qu'après mise en place d'un élément de garniture (24) dans une zone d'extrémité (22) de la portion de profilé creux (16), celui-ci ou le bourrelet (14) est replié vers l'intérieur, de manière qu'une zone repliée (26) s'étende vers l'intérieur du véhicule.
